# DEMANDE DE BREVET EUROPEEN

(11) **EP 0 693 446 A1**
(43) Date de publication de la demande: **24.01.1996**
(21) Numéro de dépôt: 95401370.2
(22) Date de dépôt: 13.06.1995
(51) Int. Cl.: B65G 59/10, B65G 59/06, B65G 47/91, B65G 47/90

(54) **Dispositif de manutention de plateaux**

(30) Priorité: 19.07.1994 FR 9408923
(71) Demandeur: SOCIETE DES EMBALLAGES KEYES, F-85770 L'Ille d'Elle (FR)
(72) Inventeur: Trapy, Guy, F-85770 l'Ile d'Elle (FR)
(74) Mandataire: Polus, Camille

(57) **Abrégé**

L'invention concerne un dispositif de manutention de plateaux, notamment de plateaux alvéolés de conditionnement de fruits, pour le transport de ces plateaux (19) d'un magasin de stockage (18) des plateaux en pile jusqu'à un transporteur (10) mobile, par l'intermédiaire d'un bras de manutention (52) muni à l'une de ses extrémités d'une tête de préhension (54) des plateaux (19), articulé sur un bâti (6), et déplaçable sous l'effet de moyens d'actionnement (60). Le transporteur comporte une surface de réception des plateaux munie d'un passage (17) pour la tête de préhension (54) et le bras de manutention. De plus, le bras de manutention (52) est déplaçable au travers de ce passage (17) entre une position de prélèvement d'un premier plateau suivant une face de celui-ci dans le magasin et une position de dépôt du plateau sur le transporteur sur cette même face.

## Description

La présente invention concerne un dispositif de manutention de plateaux, notamment de plateaux alvéolés de conditionnement de fruits, pour le transfert de ces plateaux d'un magasin de stockage des plateaux en pile jusqu'à un transporteur mobile par l'intermédiaire d'au moins un bras de manutention muni à l'une de ses extrémités d'une tête de préhension des plateaux articulé sur un bâti et déplaçable sous l'effet de moyens d'actionnement.

Il est fréquent d'utiliser, pour le conditionnement des fruits fragiles tels que des pommes, des pêches ou des tomates, des plateaux moulés, généralement en fibre cellulosique, présentant des alvéoles dont la taille correspond sensiblement à celle des fruits afin qu'ils puissent y être déposés.

De tels plateaux sont généralement formés d'une simple feuille de fibre rigide qui a été formée par moulage. Ils présentent donc sur leur face inférieure des parties en saillie formées par les alvéoles adaptés pour recevoir les fruits, seule la périphérie du plateau étant plane.

Ces plateaux de conditionnement sont généralement livrés sous forme de piles ou liasses afin de réduire leur volume lors du transport. Ainsi, la face supérieure d'un premier plateau se trouve en contact avec la face inférieure d'un plateau suivant, les alvéoles des plateaux successifs s'emboîtant les uns dans les autres.

Dans les usines de conditionnement, les fruits sont généralement mis en plateaux sur des chaînes dans lesquelles les plateaux se déplacent sur des transporteurs à courroies, les uns à la suite des autres, devant des opérateurs chargés d'y déposer les fruits, ou devant des machines automatiques.

Dans de telles installations de conditionnement, il est donc nécessaire, dans une première étape, de prélever les plateaux un à un dans la pile et de les déposer l'un derrière l'autre sur la chaîne d'emballage.

On connaît dans l'état de la technique, des dispositifs automatiques de distribution de plateaux sur une chaîne d'emballage.

De tels dispositifs comportent des magasins de stockage verticaux des plateaux empilés, disposés sur un portique au-dessus d'un transporteur. Les plateaux sont disposés dans le magasin de stockage de telle manière que leur face destinée à recevoir les fruits soit orientée vers le bas.

Un bras de manutention, muni à l'une de ses extrémités d'une ventouse de préhension d'un plateau dans le magasin de stockage, est actionné par un mécanisme à cames pour retourner et transférer un plateau du magasin de stockage vers le transporteur.

Dans de tels dispositifs, la ventouse de préhension reliée à une source de dépression présente des dimensions légèrement inférieures aux dimensions extérieures des plateaux pour lesquels elle est adaptée. Ainsi, en fonction de la taille des plateaux utilisés, et en particulier de leur format extérieur, il est nécessaire de changer la ventouse de préhension, ce qui impose des périodes importantes d'inutilisation de la chaîne de conditionnement.

De plus, de tels dispositifs nécessitent le retournement des plateaux avant leur dépôt sur le transporteur. Ce retournement étant effectué par le bras de manutention au-dessus du transporteur, de tels dispositifs présentent l'inconvénient d'être d'un encombrement important au-dessus du transporteur.

L'invention a pour but de fournir un dispositif permettant la manutention de plateaux pour le transfert de ces plateaux d'un magasin de stockage en pile vers un transporteur, qui ne nécessite pas d'adaptation du bras de manutention lors d'un changement de plateaux, qu'il s'agisse d'un changement de format extérieur de ceux-ci, ou encore d'un changement de la taille des alvéoles, et qui présente un encombrement réduit au-dessus du transporteur de conditionnement.

A cet effet, l'invention a pour objet un dispositif de manutention de plateaux, notamment de plateaux alvéolés de conditionnement de fruits, pour le transport de ces plateaux d'un magasin de stockage des plateaux en pile jusqu'à un transporteur mobile, par l'intermédiaire d'au moins un bras de manutention muni à l'une de ses extrémités d'une tête de préhension des plateaux, articulé sur un bâti et déplaçable sous l'effet de moyens d'actionnement, caractérisé en ce que la tête de préhension comporte une matrice de ventouses reliées à un dispositif d'aspiration, en ce que le transporteur comporte une surface de réception des plateaux munie d'un passage pour la tête de préhension et le ou chaque bras de manutention, et en ce que le ou chaque bras de manutention est déplaçable au travers de ce passage entre une position de prélèvement d'un premier plateau suivant une face de celui-ci dans le magasin et une position de dépôt du plateau sur le transporteur sur cette même face.

Suivant certains modes de réalisation de l'invention, le dispositif de manutention de plateaux peut présenter l'une ou plusieurs des caractéristiques suivantes :
- le passage est délimité de part et d'autre par des courroies du transporteur ;
- le ou chaque bras de manutention est monté oscillant dans un plan perpendiculaire à la direction de déplacement du transporteur ;
- le ou chaque bras de manutention comporte deux branches s'étendant à peu près perpendiculairement l'une par rapport à l'autre dans un même plan, celle d'entre elles portant la tête de préhension traversant la surface de réception des plateaux sur le transporteur au cours de son mouvement alors que l'autre branche s'étend au-dessous de la surface de réception ;
- des clapets partiellement auto-obturants sont disposés entre chaque ventouse et le dispositif d'aspiration, ces clapets s'obturant partiellement automatiquement si le débit du flux traversant le clapet depuis la ventouse vers le dispositif d'aspiration est supérieur à une valeur de seuil prédéterminée ;
- le magasin de stockage est disposé à côté du transporteur à un niveau supérieur à celui-ci et est incliné vers le bas par rapport à l'horizontale en direction du transporteur ;
- le magasin de stockage comporte des surfaces de guidage latéral des plateaux dont l'espacement est réglable par l'intermédiaire d'un agencement à vis et écrous ;
- le magasin de stockage comporte, à une extrémité de distribution, au moins un dispositif de libération et de maintien des plateaux ;
- le dispositif de libération et de maintien des plateaux comporte des doigts de retenue escamotables disposés sur le trajet des plateaux et au moins une plaque de serrage des plateaux actionnée par un vérin ;
- le ou chaque bras de manutention est actionné par un vérin à double effet à tige traversante, dont le corps est fixé au bâti et dont chacune des extrémités de la tige est solidaire des extrémités d'une chaîne d'entraînant coopérant avec un pignon d'actionnement du bras de manutention porté par son arbre d'oscillation ;
- le dispositif de manutention comporte deux bras de manutention disposés dans un même plan, associés à deux magasins respectifs de stockage, ces deux bras de manutention étant actionnés par un même vérin;
- le dispositif de manutention comporte deux bras de manutention parallèles espacés l'un de l'autre.

La présente invention sera mieux comprise à la lecture de la description qui va suivre, donnée uniquement à titre d'exemple, et faite en se référant aux dessins sur lesquels :
- la figure 1 est une vue en élévation de face d'un dispositif de manutention de plateaux double selon l'invention,
- la figure 2 est une vue en perspective partielle du dispositif de la figure 1,
- la figure 3 est un schéma présentant le fonctionnement de la tête de préhension.

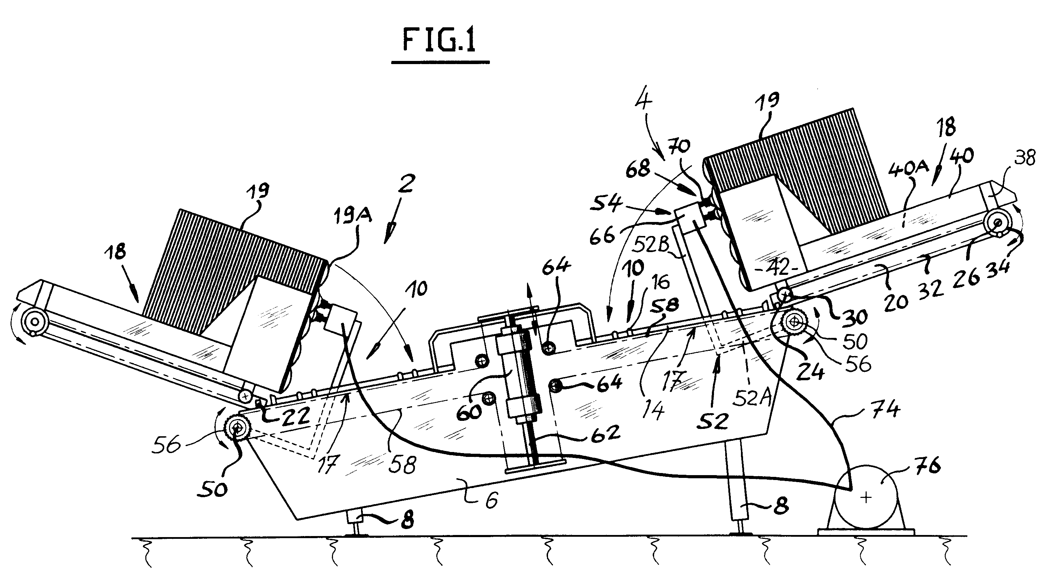

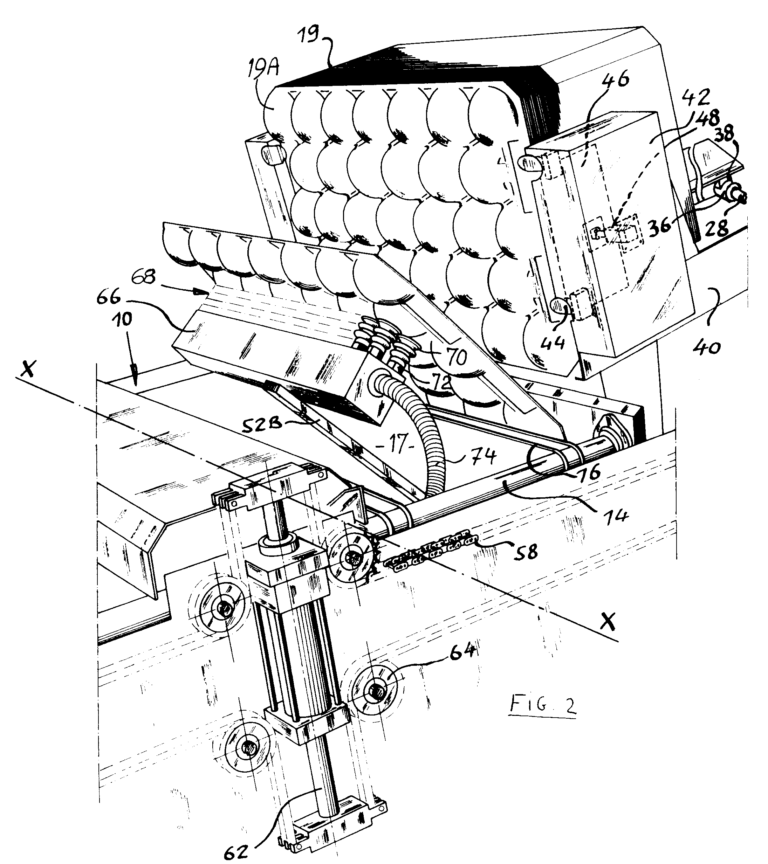

Le dispositif de manutention de plateaux ou distributeur de plateaux représenté sur les figures 1 et 2 comporte deux postes de distribution de conception similaire 2, 4, disposés face à face de part et d'autre d'un axe transversal médian X-X d'un bâti 6, reposant sur des pieds 8 réglables en hauteur.

Comme cela est visible sur la figure 2, le bâti 6 supporte deux transporteurs 10 à courroies de type connu orientées parallèlement à l'axe transversal médian X-X du distributeur, comportant chacun deux rouleaux d'entraînement et de renvoi 14 parallèles, entre lesquels sont tendues, au voisinage de leurs extrémités, des courroies de transport 16.

Ces courroies 16 de transport forment une surface de réception de plateaux et délimitent entre elles un passage 17.

De part et d'autre du bâti 6, à côté des transporteurs 10 sont disposés des magasins de stockage 18 de plateaux alvéolés 19 disposés sur leur champ, situés à un niveau supérieur à celui du transporteur. Ces magasins sont légèrement inclinés par rapport à l'horizontale, vers le bas en direction du transporteur. Ils forment par exemple un angle de 25° par rapport à l'horizontale, de sorte que les plateaux forment le même angle de 25° avec la verticale. Ils comportent un châssis tubulaire plan 20 porté par des bras de support parallèles 22 reliés aux extrémités du bâti 6 et adaptés de manière classique pour permettre le réglage de l'inclinaison des magasins. Le châssis 20 est partiellement en porte-à-faux par rapport au bâti 6.

Sur le châssis tubulaire 20 est disposé un dispositif de guidage et de support des plateaux réglable en largeur.

Ainsi, des arbres 24, 26, s'étendant parallèlement à l'axe X-X sont montés rotatifs dans des paliers non représentés à chacune des extrémités du châssis tubulaire 20. Ces deux arbres 24, 26 présentent de part et d'autre de leur partie centrale deux portions 28 filetées suivant des sens opposés et à leurs extrémités, des pignons 30 identiques entre lesquels est disposée une chaîne 32 solidarisant en rotation les deux arbres 24 et 26.

A l'une des extrémités de l'arbre 26 est disposée une manivelle 34.

Sur chacune des portions filetées 28, est engagé un manchon taraudé 36 avec lequel est venu de matière un bras de support 38 orienté vers le haut. Deux cornières de support et de guidage 40 des plateaux 19 en pile sont montées perpendiculairement aux arbres 24, 26 entre deux bras de support 38, s'étendant du même côté du magasin.

Ces cornières 40 comprennent des montants verticaux 40A formant des surfaces de guidage latéral des plateaux 19 disposés sur leur champ.

Deux dispositifs identiques 42 de libération et de maintien des plateaux sont disposés aux extrémités des cornières 40 au voisinage des transporteurs 10 définissant une extrémité de distribution du magasin de stockage. Ces dispositifs 42 comportent chacun deux doigts de retenue 44 escamotables grâce à un dispositif adapté connu, disposés sur le trajet des plateaux 19. En arrière de ces doigts de retenue 44 suivant les cornières 40, chacun des dispositifs 42 de libération et de maintien comporte une plaque de serrage 46 associée à un vérin 48. Ces plaques sont orientées l'une vers l'autre et adaptées pour assurer sous l'effet des vérins 48 un serrage latéral des plateaux 19, à l'exception d'un premier plateau 19A retenu par les doigts de retenue 44.

A chacune des extrémités du bâti 6 s'étend un arbre 50 monté oscillant dans des paliers non représentés du bâti 6. Ces arbres 50 s'étendent parallèlement à l'axe transversal médian X-X, et portent chacun au moins un bras de manutention 52 s'étendant dans un plan orthogonal à ces arbres 50.

Chaque bras de manutention 52 a une forme en L et comporte une première branche 52A solidaire de l'arbre 50, et une deuxième branche perpendiculaire 52B munie à son extrémité libre d'une tête 54 de préhension des plateaux.

Comme cela est représenté sur la figure 1, chaque poste de distribution comporte un bras unique dont la branche 52B s'étend dans le passage 17 délimité par les rouleaux 14 et les courroies 16 du transporteur 10, alors que la première branche 52A s'étend dans un logement central du bâti 6 au-dessous du transporteur formant surface réceptrice.

Selon un deuxième mode de réalisation, non représenté, le bras de manutention 52 unique peut être remplacé par deux bras parallèles espacés l'un de l'autre dont une extrémité est reliée à l'arbre 50 et dont l'autre extrémité porte la tête de préhension 54.

A l'une des extrémités de l'arbre 50, est monté un pignon 56 sur lequel est engagée une chaîne d'entraînement 58.

Suivant l'axe médian X-X du bâti 6 est disposé verticalement un vérin pneumatique à double effet 60 à tige 62 traversante dont le corps est fixé au bâti 6. Chacune des extrémités de la chaîne 58 est reliée à une extrémité de la tige traversante 62 du vérin. Des renvois d'angle 64 sont disposés sur le bâti 6 afin d'assurer le guidage de la chaîne 58 entre les extrémités de la tige 62 et le pignon 56, de manière telle que le trajet de la chaîne se fasse au voisinage des extrémités de celle-ci parallèlement au vérin 60. Cet agencement constitue des moyens d'actionnement du bras 52.

Les deux postes de distribution 2, 4 sont reliés symétriquement et de manière similaire au même vérin 60.

Le vérin 60 est actionné par un dispositif pneumatique connu non représenté.

La tête de préhension 54 comporte un collecteur de section rectangulaire allongé 66 présentant sur l'une de ses faces planes une matrice plane 68 de ventouses 70. Dans le mode de réalisation représenté sur la figure 2, cette matrice comporte deux rangées parallèles de quatorze ventouses chacune.

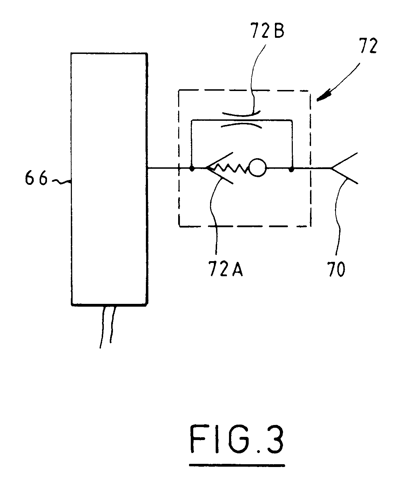

Comme schématisé sur la figure 3, chaque ventouse 70 de type classique à conduit axial est reliée au collecteur 66 par l'intermédiaire d'un clapet 72 partiellement auto-obturant, connu de l'état de la technique.

Un tel clapet commercialisé en France par la société SAPELEM sous la référence 9CL2114 comporte un clapet auto-obturant classique 72A, adapté pour interdire le passage d'un flux au travers du clapet dans un sens prédéterminé, sur lequel est relié en parallèle un conduit de faible diamètre 72B.

Le clapet 72 est monté avec une orientation telle qu'il permet un passage de fluide à travers le clapet depuis le collecteur 66 jusqu'aux ventouses 70, mais qu'il limite les flux de fluide en sens inverse.

Le collecteur 66 est relié par l'intermédiaire d'un tuyau 74 à une pompe à vide 76 formant un dispositif d'aspiration.

Un dispositif de commande (non représenté) et de type connu est relié aux différents dispositifs d'actionnement et en particulier au dispositif pneumatique d'actionnement du vérin 60, à la pompe à vide 76, aux vérins 48 associés aux plaques de serrage et aux doigts de retenue 44 escamotables. Ce dispositif de commande est adapté pour commander et synchroniser la commande des différents dispositifs d'actionnement et en particulier assurer le fonctionnement du dispositif suivant des phases qui vont être décrites plus loin.

Le dispositif de manutention de plateaux selon l'invention, tel que décrit précédemment, fonctionne de la manière suivante.

Entre les deux cornières parallèles 40, sont disposés les plateaux en pile sur leur champ, de telle sorte que les plateaux présentent leur face inférieure, opposée à la face supérieure de réception des fruits, orientée vers le transporteur adjacent.

Chaque magasin de stockage 18 est disposé avec une légère pente par rapport à l'horizontale, de telle sorte que les plateaux alvéolés 19 disposés transversalement par rapport à l'axe des magasins puissent se déplacer sous l'effet de leur propre poids entre les surfaces de guidage latéral 40A. Le réglage de l'inclinaison du magasin 18 est rendu possible par les bras de support articulés 22. Ainsi, même si le bâti 6 du distributeur n'est pas horizontal, comme cela est le cas sur la figure 1, on peut régler l'inclinaison des deux magasins de telle sorte que leur inclinaison par rapport à l'horizontale soit identique et optimale afin de permettre le déplacement des plateaux. Cet avantage est particulièrement intéressant lorsque le dispositif de distribution doit être inséré dans une chaîne de conditionnement dont les transporteurs ne sont pas horizontaux.

De plus, il est possible de régler l'écartement des cornières de guidage 40 grâce à l'agencement à vis et écrous formé par les portions filetées 28 et les manchons taraudés 36. En effet, la rotation simultanée des arbres 24 et 26, au moyen de la manivelle 34, entraîne le déplacement en translation des manchons 36 portant les cornières 40 par coopération de ceux-ci avec les portions filetées en sens opposés 28 des arbres 24 et 26.

Le réglage de l'écartement des cornières 40 permet l'utilisation des mêmes magasins de stockage pour des plateaux présentant des dimensions extérieures variables.

La manutention des plateaux par le bras de manutention 52 est assurée de la manière suivante sous la commande du dispositif de commande.

Sous l'effet du dispositif pneumatique, le mouvement de la tige 62 du vérin 60 entraîne en rotation le pignon 56 de l'arbre 50 par l'intermédiaire de la chaîne 58. Solidaire de l'arbre 50, le bras de manutention 52 oscille entre une position de prélèvement d'un plateau, représentée sur la figure 1, et une position de dépôt du plateau, dans laquelle la matrice 68 de ventouses 70 se situe au niveau de la surface réceptrice des plateaux, définie par les courroies 16.

En position de prélèvement, la matrice 68 de ventouses 70 s'étend à peu près perpendiculairement à l'axe du magasin 18 et à peu près parallèlement aux faces inférieures des plateaux stockés.

Dans cette position, la branche 52B s'étend dans le passage 17 délimité par les courroies 16, alors que l'autre branche 52A demeure au-dessous de la surface réceptrice.

Les deux bras 52 actionnés par un vérin commun 60, sont soumis à des déplacements similaires et concomitants, assurant ainsi de manière mécanique la synchronisation du fonctionnement de ces deux bras.

Lorsque le bras de manutention 52 est en position de prélèvement, telle que représentée sur la figure 1, la pompe à vide 76 est actionnée par le dispositif de commande, donnant naissance à une dépression à l'intérieur du collecteur 66. Les ventouses 70 qui sont au contact d'un alvéole de la face inférieure du premier plateau 19A maintenu dans le magasin de stockage exercent une force de préhension sur ce plateau sous l'effet de la dépression. Dans ce cas, le débit d'air au travers les clapets 72 partiellement auto-obturants est nul ou éventuellement très faible à cause de fuites dans la zone de contact de la ventouse, ainsi les clapets se maintiennent en position ouverte.

Par contre, les ventouses 70 ne se trouvant pas au contact d'un alvéole, sont obturées partiellement par les clapets partiellement auto-obturants 72, puisqu'un flux d'air important tend à circuler entre les ventouses et le collecteur 66.

Ainsi, après mise en route de la pompe à vide 76 par le dispositif de commande, chacune des ventouses de la matrice 68 se trouve soit en état d'exercer une force de préhension sur la face inférieure du premier plateau 19A, au travers d'un clapet ouvert, soit partiellement isolée du collecteur 66 par un clapet partiellement obturé. Ainsi, les pertes de dépression par écoulement d'air au niveau des ventouses, sont limitées, soit au débit d'air passant par les conduits de faible diamètre 72B pour les ventouses n'étant pas au contact d'un alvéole et ayant leur clapet 72A en position obturée, soit au débit de fuite dans la zone de contact des ventouses pour les ventouses en contact avec un alvéole ayant un clapet ouvert 72A. Les clapets 72 partiellement auto-obturants de par leur conception sont tels que le débit de fuite, dans ce dernier cas, est inférieur au débit passant dans le conduit de faible diamètre 72B d'un clapet dont la ventouse correspondante n'est pas au contact d'un alvéole. Une dépression importante peut être créée dans le collecteur 66 et à l'intérieur des ventouses en prise avec un alvéole, ce qui garantit une force de préhension importante sur le premier plateau.

Lorsqu'une dépression suffisamment poussée est atteinte dans les ventouses en prise avec un alvéole, les doigts de retenue 44 sont escamotés, libérant ainsi le premier plateau 19A maintenu par la tête de préhension 54. Le bras 52, sous l'effet du vérin 60, est alors abaissé au travers du passage 17 jusqu'à ce que la face inférieure du plateau repose partiellement sur au moins une courroie 16 du transporteur. Une fois cette position de dépôt atteinte, un distributeur de type classique actionné par le dispositif de commande interrompt la dépression et met le collecteur 66 à la pression atmosphérique, libérant ainsi le plateau qui peut alors être emporté par le transporteur. Lors de l'évacuation du plateau, le bras 52 et la tête de préhension 54 sont escamotés sous le transporteur 10.

Après évacuation du plateau, le bras est ramené en position de préhension au travers du passage 17, afin de recommencer le processus décrit précédemment.

Pendant le mouvement du bras 52, les doigts de retenue 44 sont ramenés dans leur position de maintien des plateaux, après quoi les vérins 48 sont actionnés pour rappeler les plaques de serrage 46 afin de libérer les plateaux 19 présents dans le magasin de stockage 18, afin que ceux-ci, sous l'effet de leur propre poids, se déplacent vers les doigts de retenue 44, positionnant ainsi un nouveau premier plateau 19A à l'extrémité de distribution du magasin de stockage.

Avant un nouvel escamotage des doigts de retenue 44, les plaques de serrage 46 sont remises en position de serrage par l'intermédiaire des vérins 48 afin de garantir une distribution unitaire des plateaux.

Toutes ces phases sont synchronisées et commandées par le dispositif de commande.

La tête de préhension munie de sa matrice de ventouses est adaptée pour saisir des plateaux quelles que soient leurs dimensions extérieures, la forme et la taille de leurs alvéoles. En effet, dans toutes les configurations au moins certaines des ventouses se trouvent en contact avec des parties saillantes des alvéoles, et ainsi permet la préhension d'un plateau.

Ainsi, il est aisé avec un dispositif selon l'invention de changer très rapidement le type de plateaux utilisés, puisque seul un réglage de la largeur du magasin de stockage est nécessaire en fonction du format extérieur du plateau, aucun ajustement de la tête ni des bras de manutention n'étant nécessaire.

De plus, le réglage de la largeur des magasins 18 est très aisé grâce à la manivelle 34.

Un autre avantage du dispositif réside dans la position des magasins de stockage qui sont à un niveau peu élevé, facilitant leur chargement par un opérateur.

De plus, l'inclinaison des magasins par rapport à l'horizontale permet également, si elle est maintenue faible, une force de poussée limitée des plateaux sur les doigts de retenue, garantissant ainsi ces derniers d'une usure prématurée.

Le distributeur qui a été décrit ici comporte deux postes de distribution, mais il est bien entendu qu'un tel distributeur peut comporter un unique poste de distribution de plateaux.

Par ailleurs, d'autres moyens peuvent être utilisés pour actionner les bras de manutention (52) en remplacement de l'agencement à vérin et à chaîne.

De plus, le bras de manutention peut être positionné en bout de transporteur et se déplacer dans un plan parallèle à la direction de déplacement du transporteur. Dans ce cas, le magasin est disposé également au bout du transporteur.

## Revendications

1. Dispositif de manutention de plateaux, notamment de plateaux alvéolés de conditionnement de fruits, pour le transport de ces plateaux (19) d'un magasin de stockage (18) des plateaux en pile jusqu'à un transporteur (10) mobile, par l'intermédiaire d'au moins un bras de manutention (52) muni à l'une de ses extrémités d'une tête de préhension (54) des plateaux (19), articulé sur un bâti (6), et déplaçable sous l'effet de moyens d'actionnement (60), caractérisé en ce que la tête de préhension (52) comporte une matrice (68) de ventouses (70) reliées à un dispositif d'aspiration (76), en ce que le transporteur (10) comporte une surface de réception des plateaux munie d'un passage (17) pour la tête de préhension (54) et le ou chaque bras de manutention (52), et en ce que le ou chaque bras de manutention (52) est déplaçable au travers de ce passage (17) entre une position de prélèvement d'un premier plateau (19A) suivant une face de celui-ci dans le magasin et une position de dépôt du plateau (19A) sur le transporteur sur cette même face.

2. Dispositif de manutention selon la revendication 1, caractérisé en ce que le passage (17) est délimité de part et d'autre par des courroies (16) du transporteur (10).

3. Dispositif de manutention selon la revendication 1 ou 2, caractérisé en ce que le ou chaque bras de manutention (52) est monté oscillant dans un plan perpendiculaire à la direction de déplacement du transporteur.

4. Dispositif de manutention selon l'une quelconque des revendications précédentes, caractérisé en ce que le ou chaque bras de manutention (52) comporte deux branches (52A, 52B) s'étendant à peu près perpendiculairement l'une par rapport à l'autre dans un même plan, celle (52B) d'entre elles portant la tête de préhension (54) traversant la surface de réception des plateaux sur le transporteur (10) au cours de son mouvement alors que l'autre branche (52A) s'étend au-dessous de la surface de réception.

5. Dispositif de manutention selon l'une quelconque des revendications précédentes, caractérisé en ce que des clapets (72) partiellement auto-obturants sont disposés entre chaque ventouse (70) et le dispositif d'aspiration (76), ces clapets s'obturant partiellement automatiquement si le débit du flux traversant le clapet depuis la ventouse vers le dispositif d'aspiration est supérieur à une valeur de seuil prédéterminée.

6. Dispositif de manutention selon l'une quelconque des revendications précédentes, caractérisé en ce que le magasin de stockage (18) est disposé à côté du transporteur (10) à un niveau supérieur à celui-ci et est incliné vers le bas par rapport à l'horizontale en direction du transporteur (10).

7. Dispositif de manutention selon l'une quelconque des revendications précédentes, caractérisé en ce que le magasin de stockage (18) comporte des surfaces de guidage latéral (40A) des plateaux (19) dont l'espacement est réglable par l'intermédiaire d'un agencement à vis et écrous.

8. Dispositif de manutention selon l'une quelconque des revendications précédentes, caractérisé en ce que le magasin de stockage (18) comporte, à une extrémité de distribution, au moins un dispositif (42) de libération et de maintien des plateaux.

9. Dispositif de manutention selon la revendication 8, caractérisé en ce que le dispositif (42) de libération et de maintien des plateaux comporte des doigts de retenue (44) escamotables disposés sur le trajet des plateaux et au moins une plaque de serrage (46) des plateaux actionnée par un vérin (48).

10. Dispositif de manutention selon l'une quelconque des revendications précédentes, caractérisé en ce que le ou chaque bras de manutention (52) est actionné par un vérin (60) à double effet à tige (62) traversante, dont le corps est fixé au bâti (6) et dont chacune des extrémités de la tige (62) est solidaire des extrémités d'une chaîne (58) d'entraînant coopérant avec un pignon (56) d'actionnement du bras de manutention (54) porté par son arbre d'oscillation (50).

11. Dispositif de manutention selon la revendication 10, caractérisé en ce qu'il comporte deux bras de manutention (52) disposés dans un même plan, associés à deux magasins (18) respectifs de stockage, ces deux bras de manutention (52) étant actionnés par un même vérin (60).

12. Dispositif de manutention selon l'une quelconque des revendications précédentes, caractérisé en ce qu'il comporte deux bras de manutention parallèles espacés l'un de l'autre.
